# EUROPEAN PATENT APPLICATION

(11) **EP 1 511 301 A2**
(43) Date of publication of application: **02.03.2005**
(21) Application number: 04019730.3
(22) Date of filing: 19.08.2004
(51) Int. Cl.: H04N 5/44

(54) **Television receiver**

(30) Priority: 28.08.2003 JP 2003304425
(71) Applicant: Orion Electric Company, Ltd., Takefu-shi, Fukui-ken (JP)
(72) Inventor: Tsubokawa, Yukio, Takefu-shi Fukui-ken (JP); Mizushima, Yoshinori, Takefu-shi Fukui-ken (JP)
(74) Representative: Kirschner, Klaus Dieter, Dipl.-Phys.

(57) **Abstract**

This invention provides a television receiver capable of performing stable channel receiving when a channel number key is operated to select a to-be-received channel. If the channel number key provided on a remote controller for operating the television receiver is depressed for predetermined time that is equal to or longer than tuning time that is time from starting the operation of the channel number key until finishing the reception of a channel corresponding to the key, then receiving of the channel corresponding to the operated channel number key is confirmed, and a broadcast content of the confirmed channel is output to a television monitor.

## Description

The present invention relates to a television receiver capable of performing stable channel receiving when a channel number key is operated to select a to-be-received channel.

A television receiver can receive a broadcast content transmitted from a broadcasting station corresponding to each broadcast channel, and enables a user to view and listen to the broadcast content of the channel on a television monitor. To select a broadcast channel to be received by the television receiver, one or plural channel number keys provided on an operation remote controller are operated.

Namely, by performing an operation of sequentially depressing certain channel number keys and inputting channel numbers, a channel corresponding to the input numbers can be selected.

As a conventional technique, there is known a television receiver which confirms a channel number and selects a to-be-received channel corresponding to the confirmed channel number when a channel number key representing the channel number is depressed for a predetermined time or more (see, for example, Japanese Patent Application Laid-Open No. 10-289046).

The conventional television receiver has, however, the following disadvantage. If the television receiver is to receive a channel corresponding to the input channel number key, the television receiver often cannot receive the channel stably.

Namely, according to the conventional technique, a timing of confirming the to-be-received channel does not match to a timing of a tuning operation for receiving the corresponding channel in accordance with the operation of the channel number key. This makes the tuning operation of the television receiver unstable, resulting in disturbance of video output to the television monitor.

It is, therefore, an object of the present invention to provide a television receiver capable of realizing stable channel receiving when a channel number key is operated and a to-be-received channel is selected.

According to one aspect of the present invention, there is provided a television receiver which comprises a plurality of channel number keys and a television monitor, which receives a broadcast on a channel by an operation, by a user who uses the television receiver, of depressing one or plural channel number keys corresponding to the channel, and which outputs a content of the received broadcast to the television monitor, wherein if one channel number key is depressed for a predetermined time that is equal to or longer than a tuning time which is a time from starting the operation of the one channel number key until finishing the reception of the channel corresponding to the channel number key, then it is confirmed that the channel corresponding to the operated channel number key is received, and the content of the broadcast on the channel, reception of which is thus confirmed, is output to the television monitor.

According to the television receiver of the present invention, if it is detected that one of the channel number keys is depressed for the predetermined time that is equal to or longer than the tuning time, then it is confirmed that the channel selected by the operation of the channel number keys is received, and the broadcast on the channel is output to the television monitor.

It is thereby possible to stabilize the channel switching operation for the operation of the channel number key, and stabilize switching of the broadcast content to be output to the television monitor following the channel switching.

According to the television receiver of the present invention, each of the channel number keys is a one-digit channel number key, and if one of the one-digit channel number keys is depressed for the predetermined time that is equal to or longer than the tuning time, it is confirmed that a channel of a one-digit channel number corresponding to the operated channel number key is received.

According to the television receiver of the present invention, if the one-digit channel number key is operated and the channel corresponding to the one-digit number is received, it is possible to stabilize switching of the broadcast content to be output to the television monitor following the channel switching.

Further, the television receiver can receive the channel of a two-digit channel number represented by a first-digit number and a second-digit number, the television receiver can select the channel of the two-digit channel number by operating one of the one-digit channel number keys to input the second-digit number of the two-digit channel number first, and then operating one of the one-digit channel number keys to input the first-digit number of the two-digit channel number next, and an operation of inputting the second-digit number of the two-digit channel number corresponding to the desired channel is performed by depressing the one-digit channel number key for less than the predetermined time.

According to the television receiver of the present invention, if the channel of the two-digit channel number is to be received, then the second-digit number for the channel can be input in a short time, and the channel number key can be operated easily.

Moreover, the television receiver can receive the channel of a three-digit channel number represented by a first-digit number, a second-digit number, and a third-digit number the television receiver can select the channel of the three-digit channel number by operating one of the one-digit channel number keys to input the third-digit number of the three-digit channel number first, operating one of the one-digit channel number keys to input the second-digit number of the three-digit channel number second, and then operating one of the one-digit channel number keys to input the first-digit number of the three-digit channel number, an operation of inputting the third-digit number of the three digit channel number corresponding to the desired channel is performed by depressing the one-digit channel number key for less than the predetermined time, and an operation of inputting the second-digit number of the three-digit channel number corresponding to the desired channel is performed by depressing the one-digit channel number key for less than the predetermined time after the third-digit number is input.

According to the television receiver of the present invention, if the channel of the three-digit channel number is to be received, then the third-digit number and the second-digit number for the channel can be input in a short time, and the channel number key can be operated easily.

Further, if the television receiver can receive the channel of the channel number within a range of two-digit numbers or if the television receiver can receive the channel of the channel number within a range of three-digit numbers, the first-digit number of the channel number of the channel can be confirmed only by depressing the channel number key.

On the other hand, if the television receiver can receive the channel of the channel number within a range of two-digit numbers or if the television receiver can receive the channel of the channel number within a range of three-digit numbers, the first-digit number of the channel number of the channel can be also confirmed by depressing the channel number key for the predetermined time.

It is preferable that the predetermined time that is equal to or longer than the tuning time is set equal to or shorter than 1.5 times as long as the tuning time. By so setting, the predetermined time for confirming the receiving of the channel selected by the operation of the channel number key can be set at an appropriate time. This can avoid complicating the operation of the channel number key for confirming the receiving of the channel.

Further, the predetermined time is preferably equal to or longer than 1.5 seconds, more preferably equal to or shorter than 2.0 seconds, and most preferably 1.5 seconds.

The present invention can be carried out in the manner stated above and exhibit the following advantages.

The television receiver of the present invention can stabilize the channel switching operation for the operation of the channel number key, and stabilize switching of the broadcast content to be output to the television monitor following the channel switching.
Fig. 1 is a block diagram of a television receiver according to one embodiment of the present invention;
Figs. 2A and 2B depict an example of a channel number key operation and a timing at which a channel is switched;
Figs. 3A and 3B depict an example of a channel number key operation and a timing at which a channel is switched;
Fig. 4 is a chart which depicts a timing of a channel select operation of the television receiver;
Fig. 5 is a flowchart which depicts one example of steps of procedures for causing the television receiver to operate;
Figs. 6A and 6B depict an example of a channel number key operation and a timing at which a channel is switched; and
Fig. 7 is a flowchart which depicts one example of steps of procedures for causing the television receiver to operate.

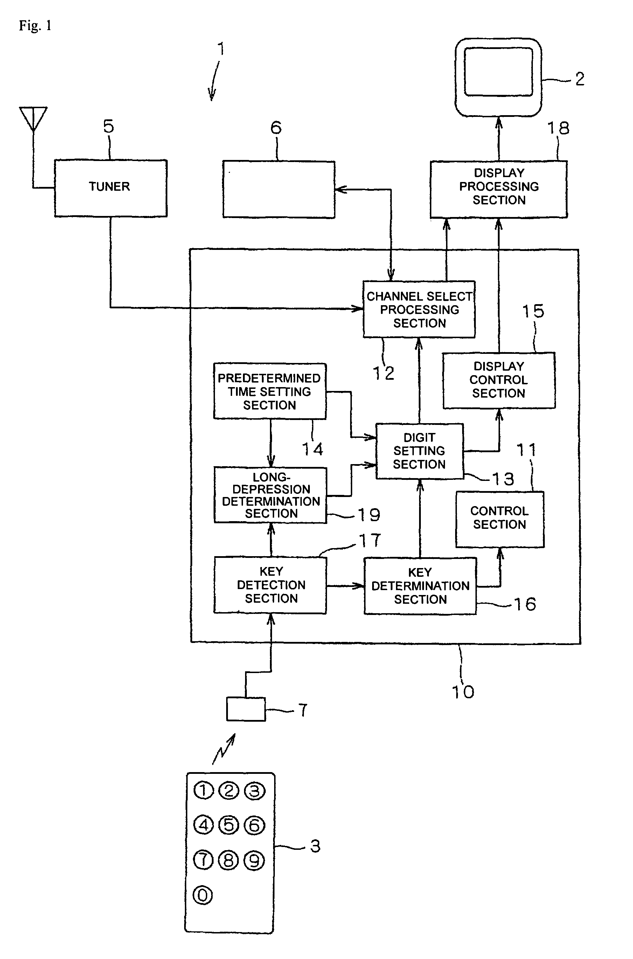

One embodiment of the present invention will be described hereinafter with reference to Figs. 1 to 7. Fig. 1 is a block diagram of a television receiver 1 according to one embodiment of the present invention, and depicts schematic configuration of the television receiver 1. The television receiver 1 includes an operation remote controller 3, a tuner 5, a control microcomputer 10, an external memory 6, a remote controller light receiving section 7, and a television monitor 2.

A user of this television receiver 1 operates the operation remote controller 3, whereby the user can operate the television receiver 1. The operation remote controller 3 includes various operation keys for operating the television receiver 1.

Specifically, the operation remote controller 3 includes a power key, an operation menu display key, and channel number keys as well as various keys necessary to operate the television receiver 1.

The power key is used to turn on or off a power of the television receiver 1. The operation menu display key is used so that an operation menu for setting conditions for actuating the television receiver 1 can be displayed on the television monitor 2 by operating the operation menu display key.

By inputting items to the operation menu displayed on the television monitor 2, the conditions for actuating the television receiver 1 can be set. To input the items to the operation menu, required operation keys on the operation remote controller are operated. In addition, a predetermined time T1 based on which it is confirmed whether the operation of the channel number key is long-depression is input through this operation menu.

The channel number keys are used to select a broadcast channel which the television receiver 1 is to receive. As the channel number keys, keys that represent various numbers, shown in Fig.1, are provided on the operation remote controller 3.

Each of the operation keys on the operation remote controller 3 is operated by user's depressing the key, i.e., user's pressing down a surface of the key in a direction of a body of the operation remote controller 3.

When the user of the television receiver 1 operates one operation key on the operation remote controller 3, an operation key determination signal allocated to the operation key is output from the operation remote controller 3 and input to the remote controller light receiving section 7. The operation key determination signal input to the remote controller light receiving section 7 is input to a key detection section 17 to be described later.

An antenna is connected to the tuner 5. The tuner 5 selects and receives a broadcast wave on a broadcast channel to be received. The broadcast channel to be received (a specific frequency allocated to the broadcast channel) is set to the tuner 5 by a channel select processing section 12 to be described later.

When the tuner 5 receives the broadcast channel thus set, a broadcast signal (a video signal and a voice signal) of this broadcast channel are output from the tuner 5 to the channel select processing section 12.

The control microcomputer 10 controls entirety of the television receiver 1. The control microcomputer 10 is composed of a central processing unit (CPU), a read only memory (ROM), and a random access memory (RAM).

The external memory 6 is connected to the control microcomputer 10. The external memory 6 is constituted to be readable and writable by the control microcomputer 10. This external memory 6 can be composed of an E2PROM.

The control microcomputer 10 includes a control section 11, the channel select processing section 12, the key detection section 17, a key determination section 16, a predetermined time setting section 14, a long-depression determination section 19, a digit setting section 13, and a display control section 15. These constituent sections of the control microcomputer 10 are modularized by a program that is capable of arithmetic processing in the ROM.

The control section 11 controls an operation of the control microcomputer 10. By causing the control section 11 to control the respective constituent sections of the control microcomputer 10, the control microcomputer 10 controls an operation of the television receiver 1. It is noted that a control program composed of procedures for controlling the television receiver 1 is stored in the ROM of the control microcomputer 10. The control microcomputer 10 executes this control program, thereby controlling the television receiver 1.

The channel select processing section 12 sets (the specific frequency of) the broadcast channel to be received to the tuner 5. Data on the to-be-received broadcast channel and data on the frequency of the channel are input to the channel select processing section 12. The data on the to-be-received broadcast channel is input to the channel select control section 12 by the digit setting section 13 to be described later.

The data on the frequency of the to-be-received broadcast channel is input to the channel select processing section 12 by the external memory 6. The external memory 6 stores data on frequencies of broadcast channels which the television receiver 1 can receive. It is noted that the external memory 6 stores data on the broadcast channels which the television receiver 1 can receive and data on receiving frequencies of the broadcast channels in advance by presetting broadcast channels.

When the to-be-received broadcast channel is set to the tuner 5 and the tuner 5 receives a broadcast signal (a video signal and/or a voice signal) of this broadcast channel, the broadcast signal received by the tuner 5 is input from the tuner 5 to the channel select processing section 12.

The video signal input to the channel select processing section 12 is input to a display processing section 18 to be described later under control of the control section 11. The voice signal input to the channel select processing section 12 is input to a loudspeaker of the television monitor 2 through a signal processing path, not shown, under control of the control section 11.

The operation key determination signal output from the remote controller light receiving section 7 is input to the key detection section 17. The operation key determination signal input to the key detection section 17 is input to the key determination section 16 and the long-depression determination section 19.

The key determination section 16 determines a type of the operated key based on the input operation key determination signal. The key determination section 16 then outputs a key determination signal which indicates the type of the operated key to the control section 11. If the operated key is a channel number key, the key determination section 16 outputs numeric data that constitutes a channel number to the digit setting section 13.

The control section 11 determines the type of the operated key based on the key determination signal input from the key determination section 16. The control section 11 then determines a content of an operation performed on the operation remote controller 3, and controls the operation of the television receiver 1 based on the content.

The long-depression determination section 19 determines whether the operation on the operation key corresponds to long-depression. The operation key determination signal is input to the long-depression determination section 19 from the key detection section 17. In addition, data on the predetermined time T1 is input to the long-depression determination section 19 from the predetermined time setting section 14 to be described later.

Further, data on a key operation time for which the channel number key is operated is input to the long-depression determination section 19. The control microcomputer 10 includes a key operation time count section, not shown, which counts the time for which the channel number key is operated. Therefore, the data on the time for which the channel number key is operated and which is counted by this key operation time count section, not shown, is input to the long-depression determination section 19.

The long-depression determination section 19 compares the data on the channel number key operation time with the predetermined time T1, and thereby determines whether the operation of the operation key corresponds to a long-depression. If determining that the operation key is depressed long, the long-depression determination section 19 outputs a long-depression detection signal. The long-depression detection signal output from the long-depression determination section 19 is input to the digit setting section 13 to be described later.

The predetermined time setting section 14 performs a processing for setting the predetermined time T1 based on which the long-depression determination is performed. Namely, the predetermined time setting section 14 displays the operation menu for allowing the user to input the predetermined time T1 on the television monitor 2, and stores data on the predetermined time T1 input through this operation menu. The predetermined time T1 is thereby set to the television receiver 1.

The display of the operation menu for inputting the predetermined time T1 and the input of the predetermined time T1 performed by the predetermined time setting section 14 are executed by operating the operation remote controller 3.

The digit setting section 13 sets a channel number of the to-be-received broadcast channel to the channel select processing section 12. A number in each digit that constitutes the channel number output from the key determination section 16 is input to the digit setting section 13.

In addition, the data on the predetermined time T1 is input from the predetermined time setting section 14 to the digit setting section 13. If the long-depression determination section 19 detects a long depression, a long-depression detection signal is input to the digit setting section 13.

The digit setting section 13 confirms the channel number of the to-be-received broadcast channel based on the input number of the channel number key and the long-depression detection signal. Upon confirming of the to-be-received broadcast channel, the digit setting section 13 outputs a receiving confirmation signal to the display control section 15.

The display control section 15 exercises control to determine whether to display the broadcast content of the channel selected by the operation of the channel number key to the television monitor 2. Specifically, when the receiving confirmation signal is input to the display control section 15 from the digit setting section 13, the display control section 15 controls the display processing section 18, to be described later, to output the broadcast content of the channel which is confirmed to be received by the digit setting section 13 to the television monitor 2.

The display processing section 18 performs processings for outputting the input video signal to the television monitor 2 as a video. The display processing section 18 includes a color signal processing circuit that includes a chroma IC, and a deflection circuit. To display the video on the television monitor 2, the display processing section 18 performs processings such as a horizontal scan, a vertical scan, a luminance control, and a color control based on the input video signal.

The video signal is input to the display processing section 18 from the channel select processing section 12. The video signal input to the display processing section 18 is processed by the display processing section 18, and output to the television monitor 2. Whether the display processing section 18 processes the video signal and outputs the video signal to the television monitor 2 is controlled by the display control section 15.

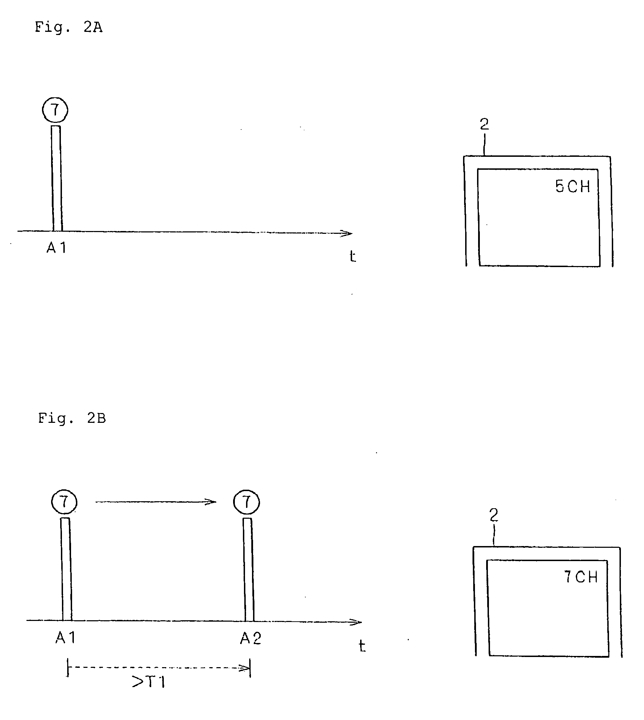

Referring next to Figs. 2A to 3B, conditions for confirming the to-be-received broadcast channel by operating the channel number key will be described. The conditions will be described while referring to examples in which the television receiver 1 can receive a channel of a one-digit channel number and a channel of a two-digit channel number.

The channel of the one-digit channel number can be selected by operating a corresponding one-digit channel number key. The channel of the two-digit channel number can be selected by operating two corresponding one-digit channel number keys among the one-digit channel number keys sequentially.

Figs. 2A and 2B depict an operation of selecting a channel having a one-digit channel number and a timing of confirming the reception of this channel.

As shown in Fig. 2A, while the television receiver 1 receives channel 5 (denoted by "5CH" in Fig. 2A, and the same shall apply hereafter) and the broadcast content of the channel 5 is output to the television monitor 2, an operation of depressing a channel number key "7" on the operation remote controller 3 is performed (A1).

As shown in Fig. 2B, when the channel number key "7" is depressed long, i.e., for the predetermined time T1 or more (A2), receiving of the channel 7 is confirmed. As a result, the broadcast content output to the television monitor 2 is switched from that of the channel 5 to that of the channel 7.

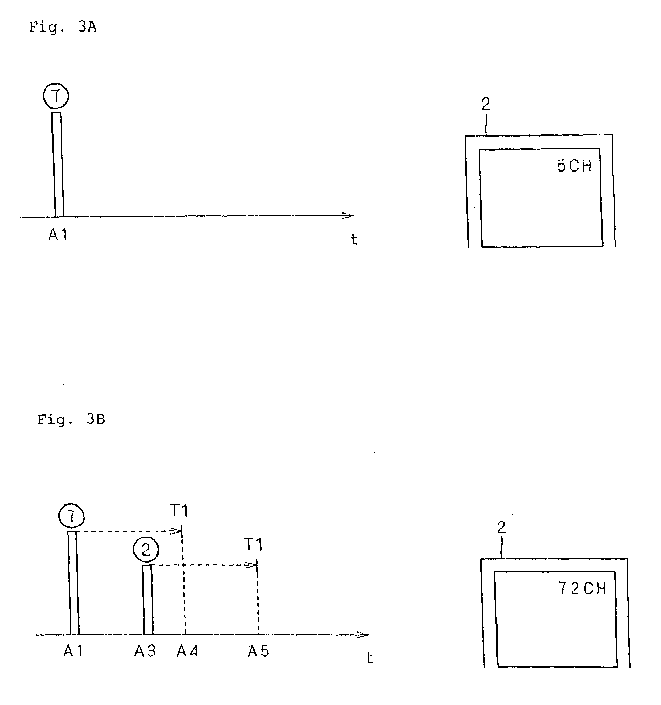

Figs. 3A and 3B depict a timing of confirming the reception of a selected channel having a two-digit channel number. As shown in Fig. 3A, while the television receiver 1 receives the channel 5 and the broadcast content of the channel 5 is output to the television monitor 2, an operation of depressing the channel number key "7" on the operation remote controller 3 is performed (A1).

As shown in Fig. 3B, a time from starting the depression of the channel number key "7" at A1 is counted. When a channel number key "2" is depressed before A4 at which the predetermined time T1 passes, it is confirmed that a second-digit number of the channel is 7 and a first-digit number of the channel is 2. As a result, receiving of channel 72 is confirmed, and the broadcast content output to the television monitor 2 is switched from that of the channel 5 to that of the channel 72.

To confirm receiving of the channel having the two-digit channel number, the first-digit number of the channel number can be alternatively confirmed by detecting that the channel number key is depressed for the predetermined time T1 or more. Namely, in the example shown in Figs. 3A and 3B, if it is detected that the channel number key "2" is depressed at A3 and that the channel number key "2" is continuously depressed long until A5 at which the predetermined time T1 passes since A3, it may be confirmed that the first-digit number of the channel number is 2.

Further, in the example shown in Figs. 3A and 3B, if the depression of the channel number key "7" is started and the depression is released before the predetermined time T1 passes, then counting of the time for which the channel number key is operated is cleared and a time for operating another channel number key can be newly counted.

Furthermore, if the first-digit number "2" is confirmed by operating the channel number key "2", then the counting of the time for operating the channel number key is cleared and a time for operating another channel number key can be newly counted.

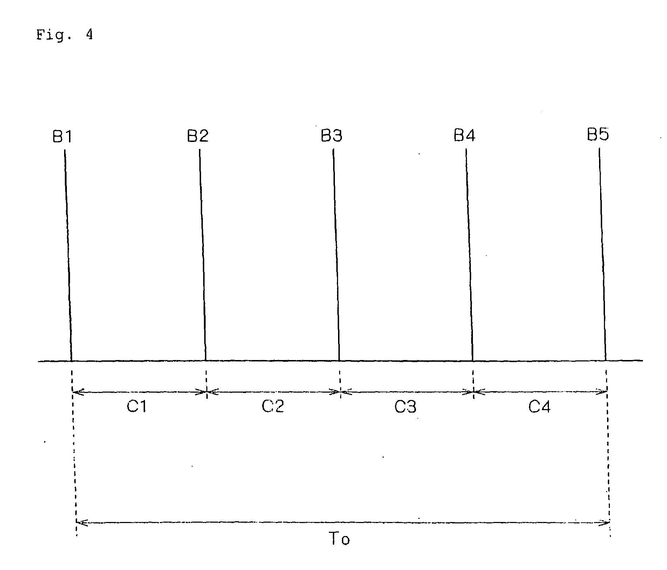

Referring next to Fig. 4, a standard of a setting of the predetermined time T1 for detecting whether the channel number key is depressed long will be described. Fig. 4 depicts a timing of a tuning operation (channel select operation) of the television receiver 1 from starting the operation of the channel number key until finishing the reception of a corresponding channel.

In Fig.4, symbol B1 denotes a timing of operating the channel number key and inputting the number to the television receiver 1. Symbol B2 denotes a timing of starting the channel select operation by the tuner 5.

Also, in Fig. 4, symbol B3 denotes a timing of starting an auto fine tuning (AFT) operation and symbol B4 denotes a timing of tuning the frequency to be set to the tuner 5 to a receiving frequency searched by the AFT operation. At the timing B4, the setting of the receiving frequency by the AFT operation is completed.

In Fig. 4, symbol B5 denotes a timing at which the tuning operation is finished. When the time passes the timing B5, the broadcast content of the channel selected by operating the channel number key can be stably output to the television monitor 2.

In Fig. 4, when the channel number key is operated at B1, the control microcomputer 10 detects that this key is operated. The control microcomputer 10 starts a channel select operation so as to receive the channel having the channel number input by operating the channel number key (B2). It takes certain time C1 from the timing B1 until the timing B2 at which the channel select operation is started.

Next, by starting the channel select operation at B2, a center frequency of the selected channel to be received is extracted and a tuning detection is started. It takes certain time C2 from the timing B2 until the timing B3 at which the tuning detection is finished.

When the tuning detection is finished at B3, the AFT operation is performed. By performing this AFT operation, an optimum receiving frequency for the center frequency of the preset channel is searched, and the searched receiving frequency is set to the tuner 5. It takes certain time C3 from the timing B3 at which the AFT operation is started until the timing B4 at which the AFT operation is finished.

When the AFT operation is finished at B4, a mute processing is started. It takes certain time C4 from the timing B4 until the timing B5 at which this mute operation is released and the tuning operation is finished. This mute operation is intended to prevent output of a so-called pop sound produced following channel switching.

As shown in Fig. 4, a tuning time taken from starting the operation of the channel number key until finishing the tuning operation is a sum of C1, C2, C3, and C4, that is, T0.

The predetermined time T1 for determining whether the channel number key is depressed long is preferably set equal to or longer than the tuning time T0. By so setting, when the one-digit channel number key is operated to switch the channel, the broadcast content can be stably output to the television monitor 2. As a result, it is possible to prevent unstable output of the television monitor 2 and prevent giving the user unpleasant feeling.

Furthermore, the predetermined time T1 for determining whether the channel number key is depressed long is preferably set to be equal to or less than 1.5 times as long as the tuning time T0. If the time set as the predetermined time T1 is too long, the user is required to depress the key for long time so as to confirm the channel, thereby disadvantageously casting operational burden on the user.

The predetermined time T1 is most preferably set equal to the tuning time T0. By so setting, it is possible to prevent unstable output of the television monitor 2 following channel switching and prevent casting load of channel switching operation on the user.

The time C1 shown in Fig. 4 is normally about 100 msec. The time C2 is normally about 300 msec. The time C3 is normally about 400 msec if a deviation of the center frequency of the channel from the receiving frequency is a maximum of 2 MHz. The time C4 is normally about 500 msec.

Preferably, therefore, the predetermined time T1 is normally set equal to or longer than 1.5 sec. The predetermined time T1 is more preferably set to be equal to or longer than 1.5 sec and equal to or shorter than 2.25 sec. The predetermined time T1 is further preferably set to be equal to or longer than 1.5 sec and equal to or shorter than 2.0 sec. The predetermined time T1 is most preferably set at 1.5 sec.

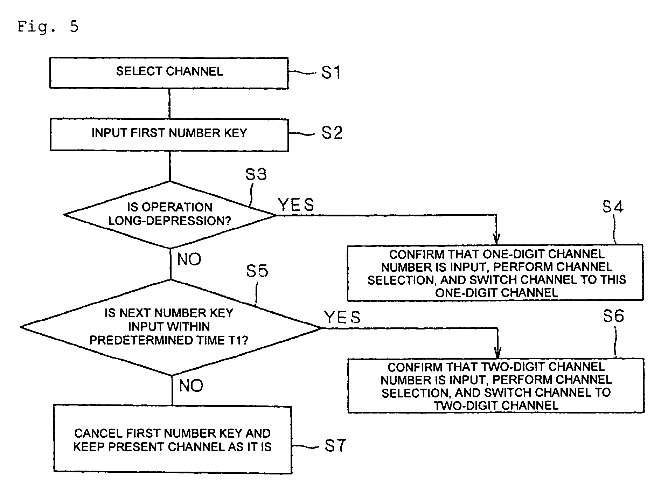

An example of causing the television receiver 1 described above to operate will now be described with reference to Fig. 5. Fig. 5 is a flowchart which depicts one example of steps of procedures for causing the television receiver 1 to operate. The television receiver 1 is turned on, and one channel number key on the operation remote controller 3 is operated to thereby select a channel (at a step S1). As a result, the television receiver 1 receives the selected one channel and the broadcast content of the channel is output to the television monitor 2.

The channel number key other than the previously operated channel number key is operated, and the first channel number key is input (at a step S2). It is determined whether the operation of the channel number key at the step S2 is long-depression (at a step S3).

If it is determined that the operation is a long-depression ("YES" at the step S3), then it is confirmed that the one-digit channel number is input, channel selection is performed so as to receive this one-digit channel, and the channel is switched to this one-digit channel (at a step S4). As a result, the broadcast content of the one-digit channel the receiving of which is confirmed is output to the television monitor 2.

If it is determined that the operation is not long-depression ("NO" at the step S3), it is determined whether a next channel number key is input within the predetermined time T1 (at a step S5). If the next channel number key is input within the predetermined time T1 ("YES" at the step S5), then it is confirmed that a two-digit channel number is input by the operation of the first and the second channel number keys, the channel selection is performed to receive this two-digit channel, and the channel is switched to the two-digit channel (at a step S6). As a result, a broadcast content of the two-digit channel receiving of which is confirmed is output to the television monitor 2.

If it is determined that no next channel number key is input ("NO" at the step S5), then the input of the first channel number key is cancelled and the present channel is kept as it is (at a step S7).

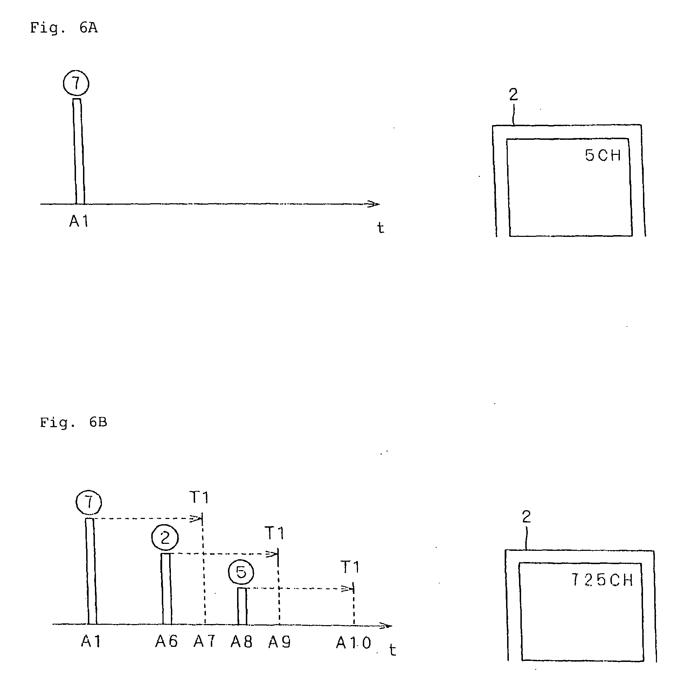

Next, an example in which the television receiver 1 can receive a channel of a three-digit channel number will be described with reference to Figs. 6A to 7. Figs. 6A and 6B depict a timing at which the channel of the three-digit channel number is selected and at which the receiving of the channel is confirmed.

As shown in Fig. 6A, while the television receiver 1 receives the channel 5 and the broadcast content of the channel 5 is output to the television monitor 2, an operation of depressing the channel number key "7" on the operation remote controller 3 is performed (A1).

As shown in Fig. 6B, a time from starting the depression of the channel number key "7" at A1 is counted. When the channel number key "2" is depressed before A7 at which the predetermined time T1 passes, it is confirmed that a third-digit number of the channel number is 7.

As shown in Fig. 6B, a time from A6 at which the depression of the channel number key "2" is started is counted. If a channel number key "5" is depressed before A9 at which the predetermined time T1 passes, it is confirmed that a second-digit number of the channel number is "2" and that a first-digit number of the channel number is "5". As a result, receiving of channel 725 is confirmed, and the broadcast content to be output to the television monitor 2 is switched from that of the channel 5 to that of the channel 725.

To confirm the receiving of the channel having the three-digit channel number, the first-digit number of the channel number can be alternatively confirmed by detecting that the channel number key is depressed for the predetermined time T1 or more. Namely, in the example shown in Figs. 6A and 6B, if it is detected that the channel number key "5" is depressed at A8 and that the channel number key "5" is continuously depressed until A10 at which the predetermined time T1 passes since A8, it may be confirmed that the first-digit number of the channel number is 5.

Further, in the example shown in Figs. 6A and 6B, if the depression of the channel number key "7" is started and the depression is released before the predetermined time T1 passes, then counting of the time for which the channel number key is operated is cleared and a time for operating another channel number key can be newly counted.

In the example shown in Figs. 6A and 6B, if the depression of the channel number key "2" is started and the depression is released before the predetermined time T1 passes, then counting of the time for which the channel number key is operated is cleared so that a time for operating another channel number key can be newly counted.

If it is confirmed that the first-digit number of the channel number is 5 by the operation of the channel number key "5", then the counting of the time for operating the channel number key is cleared so that a time for operating another channel number key can be newly counted.

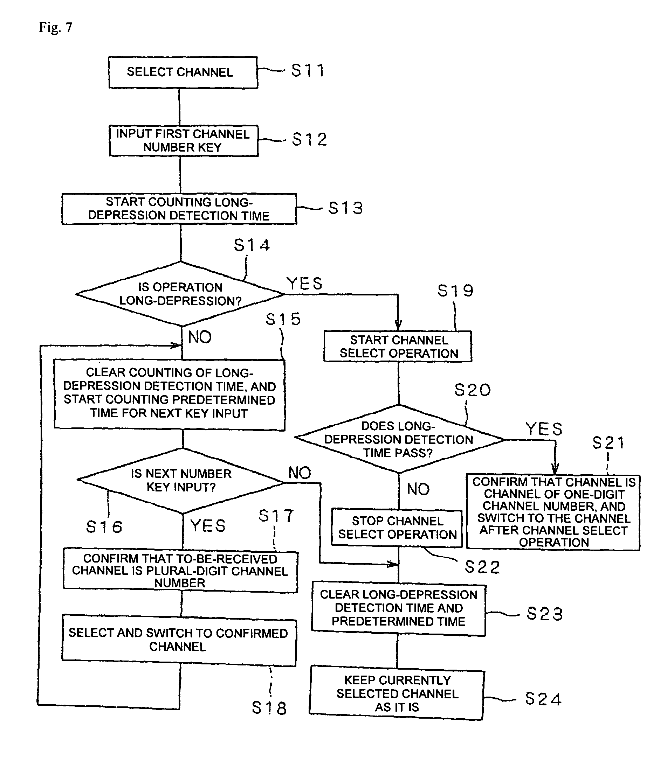

Next, the example in which the television receiver 1 can receive the channel of the three-digit channel number will be described in detail with reference to Fig. 7. Fig. 7 is a flowchart which depicts one example of steps of procedures for causing the television receiver 1 to operate.

The television receiver 1 is turned on, and one channel number key on the operation remote controller 3 is operated to thereby select a channel (at a step S11). As a result, the television receiver 1 receives the broadcast content of the selected one channel and the broadcast content of the channel is output to the television monitor 2.

The channel number key other than the previously operated channel number key is operated, and the first channel number key is input (at a step S12). Counting of long-depression detection time is then started so as to determine whether the operation of the channel number key is long-depression (at a step S13).

It is then determined whether the operation of the first channel number key at the step S12 is a long-depression (at a step S14). If it is determined that the operation is not a long-depression ("NO" at the step S14), counting of the long-depression detection time set at the step S13 is cleared, and counting of predetermined time for determining the operation of a channel number key to be input next is started (at a step S15).

It is determined whether the next channel number key is input (at a step S16). If the next channel number key is input ("YES" at the step S16), it is confirmed that the to-be-received channel is a channel of a plural-digit channel number (at a step S17). Thereafter, the channel receiving of which is confirmed is selected, the channel is switched to the selected channel, and the broadcast content of the selected channel is output to the television monitor 2 (at a step S18). Thereafter, the steps S15 and the following are repeated.

If it is not determined at the step S16 that the next channel number key is input ("NO" at the step S16), the processing goes to a step S23 to be described later.

If it is determined at the step S14 that the operation of the first channel number key is long-depression ("YES" at the step S14), a channel select operation is started (at a step S19). It is then determined whether the long-depression detection time set at the step S13 passes (at a step S20). If it is determined that the long-depression detection time passes ("YES" at the step S20), it is confirmed that the to-be-received channel is a channel of a one-digit channel number, the present channel is switched to the channel confirmed after the channel select operation, and the broadcast content of this channel is output to the television monitor 2 (at a step S21).

If it is determined at the step S20 that the long-depression detection time does not pass ("NO" at the step S20), the channel select operation is stopped (at a step S22). Counting of the long-depression detection time and counting of the predetermined time are cleared (at a step S23). The present channel is kept as it is (at a step S24).

In the embodiment shown in Figs. 1 to 7, the example in which each number key of the channel number keys represents a one-digit number has been described. To carry out the present invention, some number keys of the channel number keys may represent a two-digit number.

Namely, the television receiver according to the present invention may be constituted so that if one of the channel number keys representing two-digit number is operated, it is determined whether the number key is depressed long, and so that if it is detected that the number key is depressed long, receiving of the channel represented by said one number key can be confirmed.

## Claims

1. A television receiver which comprises a plurality of channel number keys and a television monitor, which receives a broadcast on a channel by an operation, by a user who uses the television receiver, of depressing the channel number keys corresponding to the desired channel number, and which outputs a content of the received broadcast to the television monitor, wherein if one of the channel number keys is depressed for a predetermined time that is equal to or longer than a tuning time which is a time from starting the operation of the channel number keys until finishing the reception of the channel corresponding to the channel number keys, it is confirmed that the channel corresponding to the operated channel number keys is received, and the content of the broadcast on the channel, receiving of which is thus confirmed, is output to the television monitor.

2. The television receiver according to claim 1, wherein each of said channel number keys is a one-digit channel number key, and if one of said one-digit channel number keys is depressed for the predetermined time that is equal to or longer than said tuning time, it is confirmed that a channel of a one-digit channel number corresponding to the operated channel number key is received.

3. The television receiver according to claim 2, wherein
the television receiver can receive the channel of a two-digit channel number represented by a first-digit number and a second-digit number,
the television receiver can select the channel of the two-digit channel number by operating one of said one-digit channel number keys to input the second-digit number of the two-digit channel number first, and operating one of said one-digit channel number keys to input the first-digit number of the two-digit channel number next, and
an operation of inputting the second-digit number of the two-digit channel number is performed by depressing said one-digit channel number key for less than said predetermined time.

4. The television receiver according to claim 2, wherein
the television receiver can receive the channel of a three-digit channel number represented by a first-digit number, a second-digit number, and a third-digit number,
the television receiver can select the channel of the three-digit channel number by operating one of said one-digit channel number keys to input the third-digit number of the three-digit channel number first, operating one of said one-digit channel number keys to input the second-digit number of the three-digit channel number second, and then operating one of said one-digit channel number keys to input the first-digit number of the three-digit channel number,
an operation of inputting the third-digit number of the three-digit channel number is performed by depressing said one-digit channel number key for less than said predetermined time, and
an operation of inputting the second-digit number of the three-digit channel number is performed by depressing said one-digit channel number key for less than said predetermined time after said third-digit number is input.

5. The television receiver according to claim 3 or 4, wherein the first-digit number of the channel number of said channel is confirmed only by depressing said channel number key.

6. The television receiver according to claim 3 or 4, wherein the first-digit number of the channel number of said channel is confirmed only by depressing said channel number key for said predetermined time.

7. The television receiver according to any one of claims 1 to 6, wherein said predetermined time is equal to or shorter than 1.5 times as long as said tuning time.

8. The television receiver according to any one of claims 1 to 6, wherein said predetermined time is equal to or longer than 1.5 seconds.

9. The television receiver according to claim 8, wherein said predetermined time is equal to or shorter than 2.0 seconds.

10. The television receiver according to any one of claims 1 to 6, wherein said predetermined time is 1.5 seconds.
